# EUROPÄISCHE PATENTSCHRIFT

(11) **EP 0 958 162 B1**
(45) Veröffentlichungstag und Bekanntmachung des Hinweises auf die Patenterteilung: **18.08.2004**
(21) Anmeldenummer: 98965087.4
(22) Anmeldetag: 20.11.1998
(51) Int. Cl.: B60S 1/38

(54) **WISCHBLATT**
WIPER BLADE
BALAI D'ESSUIE-GLACE

(30) Priorität: 04.12.1997 DE 19753761
(43) Veröffentlichungstag der Anmeldung: 24.11.1999
(73) Patentinhaber: ROBERT BOSCH GMBH, 70442 Stuttgart (DE)
(72) Erfinder: ZIMMER, Joachim, D-77880 Sasbach (DE)
(74) Vertreter: Raue, Reimund, Dipl.-Ing.
(86) Internationale Anmeldenummer: PCT/DE1998/003435
(87) Internationale Veröffentlichungsnummer: WO 1999/029545

(56) Entgegenhaltungen:
- EP-A- 0 765 783
- DE-A- 3 434 601
- FR-A- 1 237 303
- FR-A- 2 373 426
- FR-A- 2 642 714
- FR-A- 2 642 715

## Beschreibung

### Stand der Technik

Die Erfindung geht von einem Wischblatt nach dem Oberbegriff des Patentanspruchs 1 aus (siehe DE-C-19528015).

Bekannte Scheibenwischer besitzen einen Wischarm, der aus einem auf einer Antriebsachse befestigten Befestigungsteil, einem mit diesem über ein Kniegelenk verbundenes Gelenkteil und aus einer sich an das Gelenkteil starr anschließenden Wischstange aufgebaut ist. Ferner besitzt der Scheibenwischer ein Wischblatt, das ein Tragbügelsystem und ein von diesem gehaltenen Wischergummi aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit dem Wischergummi über eine Kraftfahrzeugscheibe, wobei das Gelenkteil und das Tragbügelsystem es ermöglichen, daß sich der Wischergummi einer Wölbung der Kraftfahrzeugscheibe anpaßt. Ein erforderlicher Anpreßdruck des Wischergummis auf der Kraftfahrzeugscheibe wird mit mindestens einer Zugfeder erreicht, die das Befestigungsteil und das Gelenkteil gemeinsam mit der Wischstange über das Kniegelenk verspannt.

Der Wischergummi besteht aus einem Elastomer. Er hat eine Kopfleiste, die über einen Kippsteg mit einer auf der zu wischenden Scheibe aufliegenden Wischlippe verbunden ist. Durch den Kippsteg kann die Wischlippe im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet der Wischergummi mit der Wischlippe über die Kraftfahrzeugscheibe. Während der Fahrt des Kraftfahrzeugs unterströmt ein Fahrwind den Wischarm und das Wischblatt und erzeugt eine Kraft entgegen der Anpreßkraft der Zugfeder. Insbesondere bei hohen Geschwindigkeiten kann die Anpreßkraft des Wischblatts auf die Windschutzscheibe durch den Fahrwind soweit reduziert werden, daß das Wischblatt von der Windschutzscheibe abhebt, auf einem Wasserfilm aufschwimmt oder daß die Wischlippe des Wischergummis umgeblasen wird. Dies führt dazu, daß das Wischblatt auf der Windschutzscheibe rattert und die Reinigungsqualität unzureichend ist.

Bekannt ist, auf der Fahrerseite eine Windschaufel in Abwärtswischrichtung vor dem Wischblatt zu befestigen, die den Fahrwind über das Wischblatt leitet und dabei das Wischblatt auf die Fahrzeugscheibe drückt. Um zu vermeiden, daß die Windschaufel vom Fahrwind unterströmt wird und dabei Windgeräusche entstehen sowie die Anpreßkraft reduziert wird, sollte die Windschaufel mit einer unteren Kante möglichst nahe an der Windschutzscheibe angeordnet sein. Die Neigung des Wischblatts und damit der Abstand der Windschaufel zur Windschutzscheibe ist jedoch von vielen sich auch über der Zeit verändernden Einflußgrößen abhängig, zwischen denen Wechselbeziehungen bestehen.

Der Wischarm und das Wischblatt bestehen aus mehreren einzelnen Bauteilen, wovon viele miteinander über Gelenke beweglich verbunden sind. Mit zunehmenden Betriebsstunden des Wischblatts und des Wischarms nehmen das Spiel zwischen den Bauteilen zu und die Torsions- und Biegewiderstandsmomente der einzelnen Bauteile ab.

Ferner wirken auf den Wischarm und auf das Wischblatt Reibkräfte und Normalkräfte zwischen Wischlippe und Windschutzscheibe, Antriebskräfte und Windkräfte. Die Reibkraft ist je nach Wischrichtung entgegengesetzt gerichtet und ist abhängig vom Zustand des Wischergummis, von den Witterungsverhältnissen, der Wischgeschwindigkeit und von der Richtung und der Stärke der Windkräfte, die durch den Fahrwind und durch Seitenwinde entstehen und sich auf die Normalkraft und Reibkraft zwischen der Windschutzscheibe und dem Wischblatt auswirken. Ferner ist je nach Position des Wischblatts die Wölbung der Windschutzscheibe verschieden und damit die Neigung relativ zum Wischblatt.

Je kleiner der Abstand der Windschaufel zur Windschutzscheibe ist, desto besser wird der Fahrwind über das Wischblatt geleitet, um so eher kommt jedoch bei verschiedenen aufeinander treffenden Einflußgrößen die Windschaufel mit der Windschutzscheibe in Kontakt.

Aus der DE 195 28 015 C1 ist eine Windschaufel bekannt, an der ein elastisches Windleitelement befestigt ist, das etwa parallel zur Wischlippe nahe an der Windschutzscheibe angeordnet und so elastisch abgestützt bzw. verformbar ist, daß es bei höheren Fahrgeschwindigkeiten des Kraftfahrzeugs unter dem Fahrwind zumindest in einem Wischbereich an der Windschutzscheibe anliegt. Trifft das elastische Windleitelement auf die Windschutzscheibe auf, kommt es dabei zu einem Aufschlaggeräusch, die Anpresskraft der Wischlippe auf der Windschutzscheibe wird abrupt reduziert, was dazu führen kann, dass das Wischblatt anfängt zu rattern und die Wischlippe aufgeschwemmt wird. Ferner kann das Windleitelement bei bestimmten Einflussgrößen, wie beispielsweise Nieselregen, zu Schwingungen angeregt werden, die sich auf das Wischblatt übertragen und zu einem Wischblattrattern führen.

Die FR-A-2 642 714 zeigt eine Windschaufel aus einem festen Material, das mit einem elastischen Material beschichtet ist. Das elastische Material bildet an der vorderen Kante eine zur Windschutzscheibe weisende Lippe. Durch diese Lippe sollen beim Kontakt mit der Windschutzscheibe Beschädigungen der Glasfläche vermieden werden. Die Lippe ist sehr kompakt ausgebildet und steht etwa rechtwinklig zur Windschutzscheibe. Dadurch ist die Lippe beim Aufschlag auf die Windschutzscheibe wenig nachgiebig, verursacht Geräusche und kann das Wischblatt zum Rattern anregen.

Die EP-A-0 765 783 zeigt eine Windschaufel, die sich immer über mehrere Kontaktfinger annähernd senkrecht an der Windschutzscheibe abstützt. Die Kontaktfinger sind regelmäßig über der Länge der Windschaufel verteilt und erstrecken sich jeweils nur über eine geringe Länge der Windschaufel, um nicht das Widerstandsmoment der Windschaufel zu erhöhen. Sie sind nach einer Ausführung aus dem Material der Windschaufel gefertigt. Sie können aber auch als unabhängige Teile aus einem Werkstoff mit einem niedrigen Reibungskoeffizienten gefertigt werden, weil die Kontaktfinger im Wischerbetrieb ständig über die Windschutzscheibe gleiten.

Die vorliegende Erfindung befasst sich mit dem Problem, das auftritt, wenn die Windschaufel insbesondere bei der Abwärtsbewegung des Scheibenwischers mit ihrer Lippe auf die Fahrzeugscheibe auftreffen kann, und zwar in Bezug auf die Geräuschentwicklung und die Rückwirkungen auf die Wischlippe des Wischblatts.

### Vorteile der Erfindung

Erfindungsgemäß ist an einem Wischblatt oder an einem Wischarm eine Windschaufel befestigt, die sich in einer Abwärtswischbewegung vor dem Wischblatt befindet. Die Windschaufel hat eine zur Windschutzscheibe weisende, in Richtung der Wischlippe geneigte, elastisch weiche Lippe, die durch die Bewegungsenergie der Kippbewegung der Windschaufel und des Wischblatts über den Federweg in Richtung auf die Wischlippe ausgelenkt wird. Die Windschaufel ist mit der elastisch weichen Lippe besonders dicht über der Windschutzscheibe angeordnet, jedoch soweit entfernt, dass die Lippe im Normalfall und insbesondere bei der Aufwärtswischbewegung stets dicht über der Windschutzscheibe geführt wird. Bei einer Abwärtswischbewegung in Richtung der Windschaufel werden das Wischblatt und der Wischarm mit der Windschaufel zur Windschutzscheibe verdreht, wodurch der Abstand zwischen Windschaufel bzw. der Lippe zur Windschutzscheibe abnimmt. Kommen bei der Abwärtswischbewegung verschiedene Einflussgrößen hinzu, wie beispielsweise ein starker Fahrwind, hohe Reibkräfte, eine schnelle Wischgeschwindigkeit usw., sodass die Windschaufel mit der elastisch weichen Lippe auf die Windschutzscheibe auftrifft, wird die Lippe in die Richtung der Wischlippe ausgelenkt und kompensiert bzw. federt dabei die Bewegungsenergie der Windschaufel und des Wischblatts durch eine Abrollbewegung elastisch ab. Je weiter die Lippe durch die Bewegungsenergie der Windschaufel und des Wischblatts über den Federweg in Richtung Wischlippe ausgelenkt wird, um so kleiner wird der Hebelarm, über den die Bewegungsenergie die Lippe auslenkt, um so mehr Material wird elastisch verformt, wodurch über einen insgesamt großen Federweg ein günstiger Übergang von einer kleinen Reaktionskraft zu einer größeren Reaktionskraft geschaffen wird. Ein günstiger Übergang kann ferner durch die Wahl der Kontur der Lippe unterstützt werden, beispielsweise indem sich diese in Richtung der Windschutzscheibe verjüngt. Durch die kleine Reaktionskraft zu Beginn des Federwegs und durch die Abrollbewegung wird ein hörbares Auftreffgeräusch der Windschaufel bzw. der Lippe auf der Windschutzscheibe vermieden und die Anpreßkraft der Wischlippe wird nur geringfügig und insbesondere nicht abrupt reduziert. Das Wischblatt fängt nicht an zu rattern und wird nicht aufgeschwemmt. Die elastisch weiche Lippe besitzt durch die abgewinkelte Kontur ein größeres Biegewiderstandsmoment gegen die Windkraft, wodurch sie weniger leicht vom Fahrwind umgeblasen und unterströmt wird. Durch die abgewinkelte Kontur wirken auf die Lippe von Beginn an des Federwegs nicht nur Biegemomente, sondern auch Zugkräfte entgegen der Wischbewegung, die ein Schwingen der Lippe vermeiden, was zu einem Wischblattrattern führen könnte.

Die Windschaufel kann bei Scheibenwischanlagen mit zwei Wischarmen an jedem Wischblatt bzw. an jedem Wischarm oder auch bei Scheibenwischanlagen mit einem Wischarm angebracht sein. Der wichtigste Wischbereich ist auf der Fahrerseite, so daß zumindest eine Windschaufel in Abwärtswischbewegung auf der Fahrerseite vor dem Wischblatt angeordnet ist.

Nach einer Ausgestaltung der Erfindung ist die Lippe in dem Bereich, mit dem sie mit der Windschutzscheibe in Kontakt kommt, gestuft, gewellt oder gezackt. Die Windschaufel trifft dadurch mit einer kleineren Fläche auf die Windschutzscheibe. Zu Beginn des Federwegs wird weniger Material durch die Bewegungsenergie verformt, die Reaktionskraft wird reduziert und das Auftreffgeräusch weiter gesenkt. Ferner wird die Reibkraft und insbesondere die Adhäsion verringert.

Dies kann mit einer Lippe erreicht werden, die an der Stirnseite gestuft, gezackt oder gewellt ist oder auch mit einer Lippe, deren Materialstärke zumindest in Richtung der Wischlippe gestuft, gezackt oder gewellt variiert. Zweckmäßigerweise werden die Zacken, Wellen und/oder Stufen der Lippe mit einer kleineren Höhe als 2 mm ausgeführt. In einem Abstand von ca. 0 bis 2 mm über der Windschutzscheibe kann die Strömungsgeschwindigkeit durch den Fahrwind nahezu vernachlässigt werden. Es wird trotz einer geringen Auflagefläche verhindert, daß die Lippe unterströmt wird.

In einer Ausgestaltung der Erfindung ist die Windschaufel elastisch mit dem Wischblatt oder mit dem Wischarm verbunden. Der Abstand der Windschaufel bzw. der Lippe zur Windschutzscheibe wird dadurch abhängig vom Fahrwind eingestellt. Bei höheren Fahrgeschwindigkeiten und damit stärkerem Fahrwind wird die Windschaufel dichter an die Windschutzscheibe gedrückt und vermieden, daß das Wischblatt abhebt. Bei geringeren Fahrgeschwindigkeiten kann die Windschaufel weiter von der Windschutzscheibe entfernt sein, ohne daß die Windschaufel abgehoben wird. Ferner wird sicher gestellt, daß die Windschaufel nicht ungewollt bei niedrigen Fahrgeschwindigkeiten mit der Windschutzscheibe in Kontakt kommt. Ein Anschlag der elastischen Lagerung in Richtung Windschutzscheibe kann so gewählt werden, daß bei Höchstgeschwindigkeit die Windschaufel mit der Lippe knapp über der Windschutzscheibe zum stehen kommt und nur bei zusätzlich hinzukommenden Einflußgrößen die Lippe der Windschaufel in Abwärtswischbewegung auf die Windschutzscheibe trifft, wie beispielsweise erhöhte Reibung. Möglich ist jedoch auch, daß ab einer gewissen Geschwindigkeit die Lippe bei der Abwärtswischbewegung auf die Windschutzscheibe trifft.

Die Lippe kann als zusätzliches Bauteil an der Windschaufel befestigt sein. Vorzugsweise ist die Windschaufel jedoch ein Zweikomponentenbauteil, mit einem festen Bauteil und mit der elastisch weichen Lippe. Die Anzahl der einzelnen Bauteile wird reduziert, ein Montageschritt wird eingespart und die Gefahr wird vermieden, daß sich die Befestigung löst.

Zum Herstellen der Zweikomponentenwindschaufel wird ein Verfahren vorgeschlagen, bei dem zuerst das feste Bauteil in einer ersten Gußform gegossen wird. Nachdem das Material erstarrt ist, wird in eine Ausnehmung im festen Bauteil und in eine zweite, am festen Bauteil angeordnete Gußform Material für die Lippe eingespritzt. Nachdem das Material einen elastisch weichen Zustand angenommen hat, wird die zweite Gußform entfernt. Die Lippe wird dabei zwangsentformt, indem diese kurzzeitig gerade ausgelenkt wird. Es kann für die Lippe eine kostengünstige einteilige Gußform verwendet werden. Das Herstellverfahren besteht aus wenigen, einzelnen Verfahrensschritten und ist einfach und schnell. Ferner ist die Lippe sicher mit dem festen Bauteil verbunden. Die Lippe kann jedoch auch separat gegossen und anschließend in das feste Bauteil eingefädelt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer Windschaufel von oben,
- Fig. 2: einen vergrößerten Ausschnitt eines Wischblatts von der Seite,
- Fig. 3: ein Kraftfahrzeug,
- Fig. 4: einen Schnitt entlang der Linie IV-IV in Fig. 1 in einer Ausgangsstellung,
- Fig. 5: ein Wischblatt nach Fig. 4 unmittelbar nach der Ausgangsstellung,
- Fig. 6: ein Wischblatt nach Fig. 4 kurz vor einer Umkehrlage,
- Fig. 7: ein Wischblatt nach Fig. 4 kurz nach einer Umkehrlage,
- Fig. 8: eine räumlich dargestellte Windschaufel,
- Fig. 9: eine vergrößerte Ansicht einer Lippe der Windschaufel nach Fig. 8, von deren Stirnseite,
- Fig. 10: eine Variante der Lippe nach Fig. 9 mit gezackter Kontur,
- Fig. 11: eine Variante der Lippe nach Fig. 9 mit einer gestuften Kontur,
- Fig. 12: eine räumlich dargestellte Windschaufel,
- Fig. 13: eine vergrößerte Ansicht eines Ausschnitts einer Lippe der Windschaufel nach Fig. 12 von vorne,
- Fig. 14: eine Variante der Lippe nach Fig. 13 mit einer gewellten Kontur,
- Fig. 15: eine Variante der Lippe nach Fig. 13 mit einer gestuften Kontur,
- Fig. 16: eine Windschaufel mit einer Gußform für eine Lippe und
- Fig. 17: eine Windschaufel nach Fig. 17, bei der die Gußform entfernt wird.

### Beschreibung der Ausführungsbeispiele

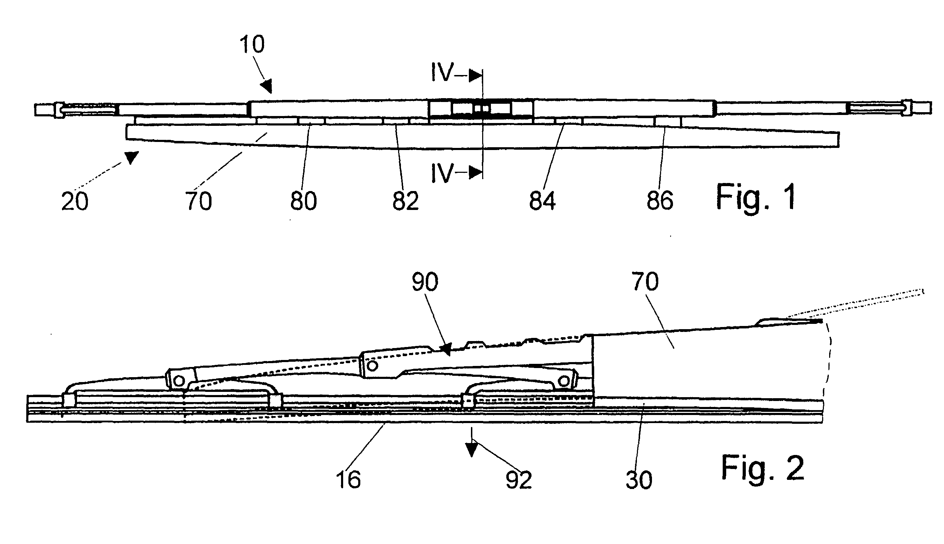

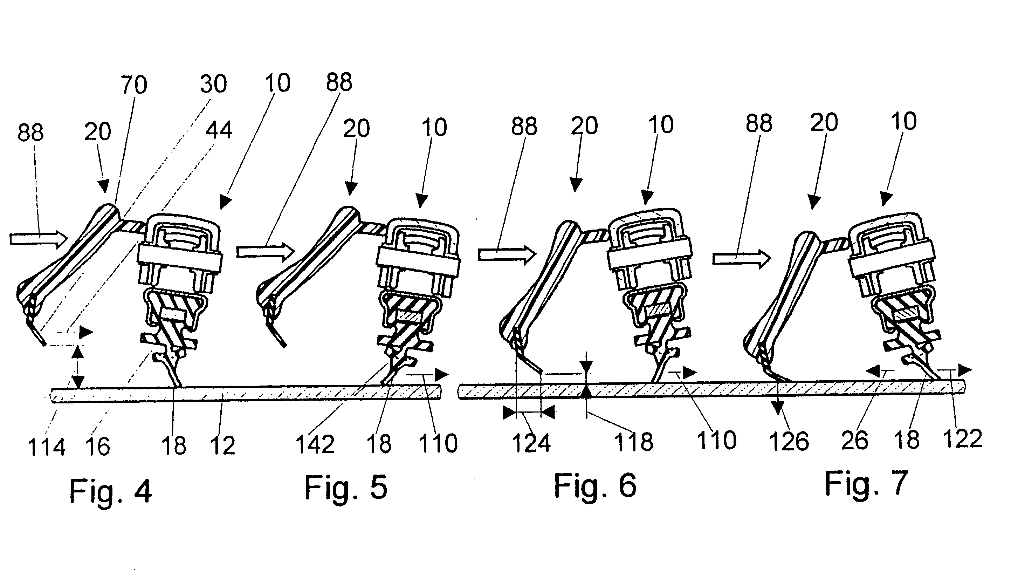

In Fig. 1 ist ein Wischblatt 10 mit einer Windschaufel 20 dargestellt. Die Windschaufel 20 ist am Wischblatt 10 über Befestigungselemente 80, 82, 84, 86 elastisch gelagert, wodurch sich die Lage der Windschaufel 20 zum Wischblatt 10 und zur Windschutzscheibe 12 (Fig. 4 bis 5) abhängig von der Stärke des Fahrwinds 88 einstellen kann. Die Befestigungselemente 80, 82, 84, 86 können gesteckt, geklebt und/oder geschweißt sein.

Die Windschaufel 20 erstreckt sich in Längsrichtung nahezu über die vollständige Länge des Wischblatts 10 und deckt dabei ein Tragbügelsystem 90 des Wischblatts 10 ab (Fig. 2). Die Windschaufel 20 ist in Richtung 92 der Windschutzscheibe 12 entsprechend dieser gewölbt und besitzt dadurch in Längsrichtung zu der Windschutzscheibe 12 nahezu einen gleichbleibenden Abstand.

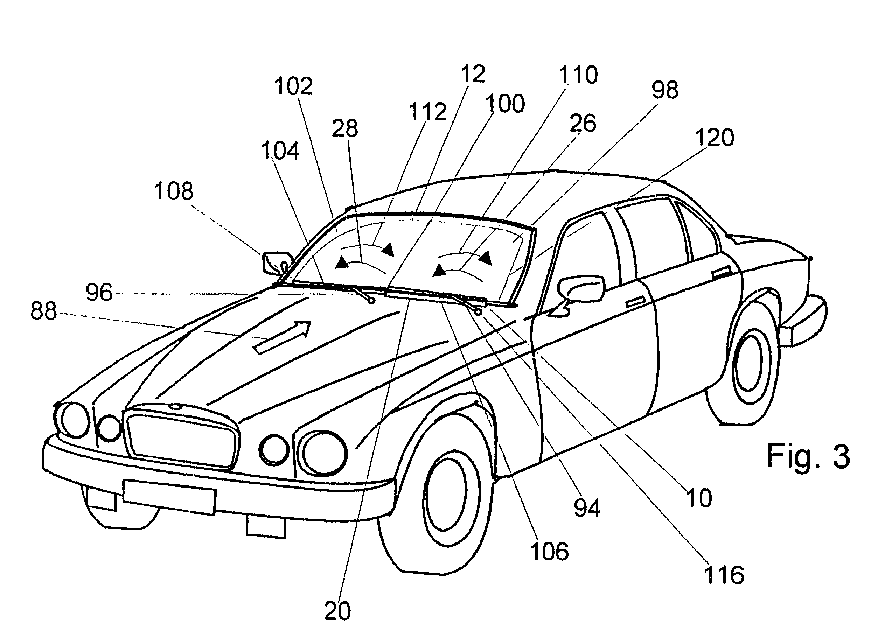

Vorzugsweise ist die Windschaufel 20 an einer Scheibenwischanlage mit zwei Wischarmen 94, 96 an beiden oder nur auf der Fahrerseite 98 am Wischblatt 10 befestigt (Fig. 3). Bei der abgebildeten Scheibenwischanlage des Kraftfahrzeugs 14 in Fig. 3 sind die Wischblätter 10, 104 in ihren Parkstellungen 106, 108 nebeneinander im unteren Bereich auf der Windschutzscheibe 12 angeordnet. Die Wischarme 94, 96 schwenken über eine senkrechte Stellung nicht oder nur geringfügig hinaus und werden dadurch bei ihren Abwärtswischbewegungen 26, 28 und Aufwärtswischbewegungen 110, 112 quer zu ihrer Längserstreckung nur von einer Seite vom Fahrwind 88 angeströmt. Die Windschaufel 20 ist auf dieser Seite des Wischblatts 10, in Abwärtswischbewegung 26 vor dem Wischblatt 10, an diesem befestigt und preßt über den gesamten Wischradius das Wischblatt 10 auf die Windschutzscheibe 12.

Möglich ist auch, daß eine Windschaufel an einer Scheibenwischanlage mit einem Wischarm am Wischblatt befestigt ist. Ein Einarmwischer schwenkt beim Betrieb von einer Seite 98 der Windschutzscheibe 12 über eine Mittelstellung 100 zu einer anderen Seite 102 und wird dabei quer zur Längserstrekkung von beiden Seiten gleichermaßen von dem Fahrwind 88 angeströmt. Um sicher zu stellen, daß das Wischblatt sicher auf der Fahrerseite 98 der Windschutzscheibe 12 aufliegt, ist die Windschaufel vorzugsweise in Abwärtswischbewegung auf der Fahrerseite vor dem Wischblatt befestigt.

In den Fig. 4 bis 7 ist ein Wischzyklus des Wischblatts 10 mit der Windschaufel 20 dargestellt. Das Wischblatt 10 liegt mit einem Wischergummi 16 über eine Wischlippe 18 auf der Windschutzscheibe 12 auf. Am Wischblatt 10 ist die Windschaufel 20 befestigt. Diese ist ein Zweikomponentenbauteil mit einem festen Bauteil 70 aus Kunststoff oder Blech und mit einer zur Windschutzscheibe 12 hin angeordneten elastisch weichen Lippe 30 aus Elastomer, die erfindungsgemäß in Richtung 44 der Wischlippe 18 abgewinkelt ist.

In Fig. 1 befindet sich das Wischblatt 10 in der Parkstellung 106 (Fig. 3). Die Windschaufel 20 befindet sich mit der Lippe 30 mit einem Abstand 114 über der Windschutzscheibe 12. Wird das Wischblatt 10 betätigt (Fig. 5), kippt die Wischlippe 18 entgegen der Aufwärtswischbewegung 110 in einem Kippsteg 142 um. Über den Wischradius in Aufwärtswischbewegung 110 verändert sich durch die Wölbung der Windschutzscheibe 12 und durch die Ausrichtung einer Antriebsachse 116 des Wischarms 94 die Neigung des Wischblatts 10 zur Windschutzscheibe 12, so daß das Wischblatt 10 in Richtung der Windschaufel 20 zur Windschutzscheibe 12 geneigt ist (Fig. 6). Der Abstand 114 der Lippe 30 zur Windschutzscheibe 12 verringert sich dabei auf einen Abstand 118. Bei einer Umkehrlage 120 (Fig. 3) kippt die Wischlippe 18 entgegen der Abwärtswischbewegung 26 (Fig. 7). Auf das Wischblatt 10 wirkt eine Reibkraft 122 zwischen Wischlippe 18 und Windschutzscheibe 12, die das Wischblatt 10 weiter in Richtung Windschaufel 20 zur Windschutzscheibe 12 neigt. Ferner wird die Windschaufel 20 entgegen dem Fahrwind 88 bewegt, wodurch diese weiter in Richtung Windschutzscheibe 12 gedrückt wird. Die Windschaufel 20 ist so dicht über der Windschutzscheibe 12 angeordnet, daß die Windschaufel 20 über die Lippe 30 bei zusammentreffen verschiedener Einflußgrößen in der Abwärtswischbewegung mit der Windschutzscheibe 12 in Kontakt kommt, wie beispielsweise bei einer besonders großen Reibkraft 122 und einer aus Fahrwind 88 und Relativbewegung des Wischblatts 10 resultierenden großen Windkraft. Dabei wird die Bewegungsenergie der Kippbewegung der Windschaufel 20 und des Wischblatts 10 durch die Lippe 30 kompensiert, indem diese entgegen der Abwärtswischbewegung 26 in Richtung der Wischlippe 18 ausgelenkt und die Bewegungsenergie durch eine elastische Abrollbewegung aufnimmt. Zu Beginn wirkt die Bewegungsenergie über einen großen Hebelarm 124 auf die Lippe 30. Die Lippe 30 erzeugt nur eine kleine Reaktionskraft 126 auf die Windschutzscheibe 12, wodurch ein hörbares Auftreffgeräusch und ein abrupter Rückgang der Anpreßkraft der Wischlippe 18 auf der Windschutzscheibe 12 vermieden wird. Die Wischlippe 18 wird dadurch nicht aufgeschwemmt und das Wischblatt nicht zum Rattern angeregt. Ferner ist die Lippe 30 wie die Wischlippe 18 entgegen der Abwärtswischbewegung 26 ausgerichtet. Sobald die Lippe 30 mit der Windschutzscheibe 12 in Kontakt kommt, wirken auf diese Zugkräfte entgegen der Wischbewegung 26, die ein Schwingen der Lippe 30 und des Wischblatts 10 verhindern.

Auf dem Weg zur Parkstellung 106 verändert sich die Neigung des Wischblatts 10 zur Windschutzscheibe 12, so daß die Windschaufel 20 wieder von der Windschutzscheibe 12 abgehoben wird. Aus der Parkstellung 106 muß dadurch die Adhäsion der Lippe 30 auf der Windschutzscheibe 12 nicht überwunden werden (Fig. 4). Die Windschaufel 20 besitzt bei der Aufwärtswischbewegung 110 mit oder ohne elastische Lagerung stets einen gewissen Abstand zur Windschutzscheibe 12 und kann nur beim Zusammentreffen verschiedener Einflußgrößen in der Abwärtswischbewegung 26 mit der Windschutzscheibe 12 in Kontakt kommen.

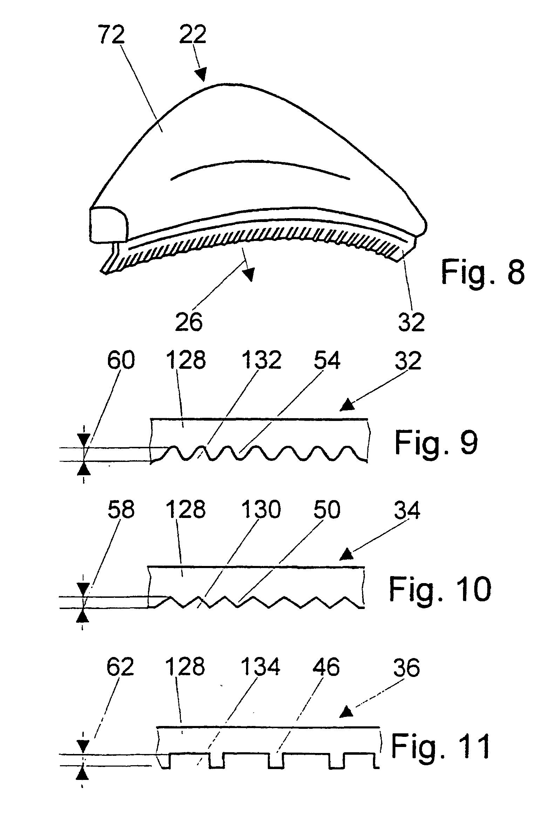

Die in Fig. 8 dargestellte Windschaufel 22 besteht aus einem festen Bauteil 72 und einer elastisch weichen Lippe 32, deren Stirnseite in Fig. 9 gezeigt ist. Die Lippe 32 besitzt eine wellige Materialstärke, und zwar, indem sie in Richtung der Abwärtswischbewegung 26 Wellen 54 aufweist. Die Auflagefläche der Lippe 32 auf der Windschutzscheibe 12 ist gering und damit die Reibkraft und die Adhäsion. Trifft die Lippe 32 auf die Windschutzscheibe 12 auf, wird ferner zu Beginn weniger Material verformt und die Reaktionskraft 126 auf die Windschutzscheibe 12 und das Auftreffgeräusch weiter reduziert.

Möglich ist auch Lippen 34, 36 mit Zacken 50 und/oder Stufen 46 auszuführen (Fig. 10 u. 11). Die Wellen 54, Zacken 50 und Stufen 46 besitzen vorzugsweise eine Höhe 58, 60, 62 kleiner als 2 mm, wodurch eine Strömungsgeschwindigkeit durch Freiräume 130, 132, 134 vernachlässigt werden kann.

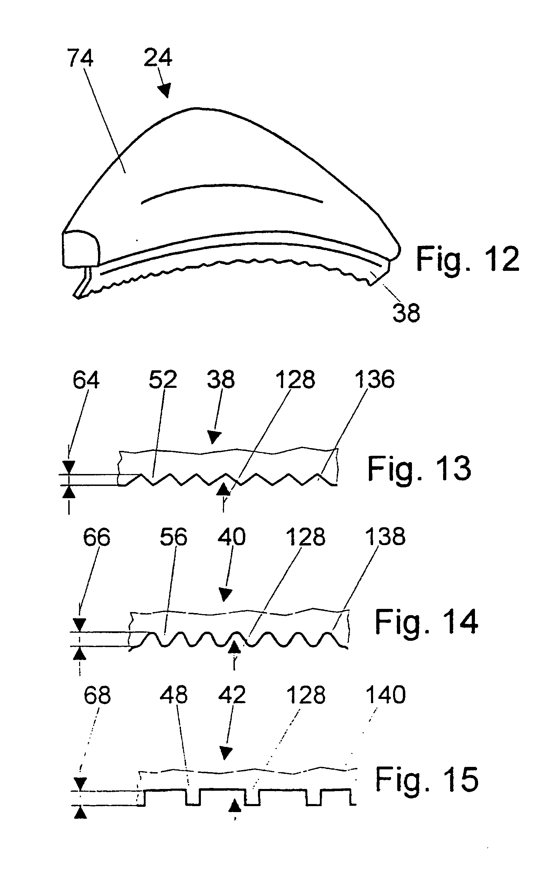

In Fig. 12 ist eine Windschaufel 24 mit einem festen Bauteil 74 und einer Lippe 38 dargestellt, die an der Stirnseite 128 gezackt ausgeführt ist (Fig. 13). Möglich ist auch Lippen 40, 42 an der Stirnseite 128 mit Wellen 56 und/oder Stufen 48 auszuführen (Fig. 14, 15). Die Zacken 52, die Wellen 56 und die Stufen 48 besitzen eine Höhe 64, 66, 68 kleiner als 2 mm. Eine Strömungsgeschwindigkeit durch Freiräume 136, 138, 140 kann vernachlässigt werden.

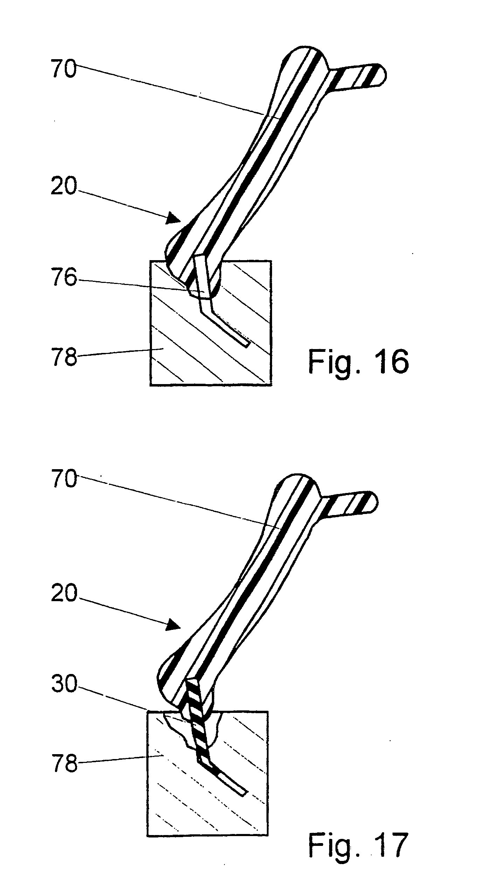

In den Fig. 16 und 17 ist gezeigt, wie die Lippe 30 der Windschaufel 20 gefertigt wird. Am fertig gegossenen festen Bauteil 70 wird im vorderen, später zur Windschutzscheibe 12 weisenden Bereich, eine Gußform 78 angebracht (Fig. 16). Anschließend wird in eine Ausnehmung 76 im Bauteil 70 und in die Gußform 78 Material für die Lippe 30 eingespritzt. Nachdem das Material der Lippe 30 einen elastisch weichen Zustand angenommen hat, wird die Gußform 78 vom Bauteil 70 entfernt, wobei die Lippe 30 entgegen ihrer abgewinkelten Kontur gerade ausgerichtet bzw. zwangsentformt wird (Fig. 17). Die Lippe 30 ist anschließend sicher und fest mit dem Bauteil 70 verbunden.

### Bezugszeichen

- 10: Wischblatt
- 12: Windschutzscheibe
- 14: Kraftfahrzeug
- 16: Wischergummi
- 18: Wischlippe
- 20: Windschaufel
- 22: Windschaufel
- 24: Windschaufel
- 26: Abwärtswischbewegung
- 28: Abwärtswischbewegung
- 30: Lippe
- 32: Lippe
- 34: Lippe
- 36: Lippe
- 38: Lippe
- 40: Lippe
- 42: Lippe
- 44: Richtung
- 46: Stufen
- 48: Stufen
- 50: Zacken
- 52: Zacken
- 54: Wellen
- 56: Wellen
- 58: Höhe
- 60: Höhe
- 62: Höhe
- 64: Höhe
- 66: Höhe
- 68: Höhe
- 70: Bauteil
- 72: Bauteil
- 74: Bauteil
- 76: Ausnehmung
- 78: Gußform
- 80: Befestigungselement
- 82: Befestigungselement
- 84: Befestigungselement
- 86: Befestigungselement
- 88: Fahrwind
- 90: Tragbügelsystem
- 92: Richtung
- 94: Wischarm
- 96: Wischarm
- 98: Fahrerseite
- 100: Mittelstellung
- 102: Seite
- 104: Wischblatt
- 106: Parkstellung
- 108: Parkstellung
- 110: Aufwärtswischbewegung
- 112: Aufwärtswischbewegung
- 114: Abstand
- 116: Antriebsachse
- 118: Abstand
- 120: Umkehrlage
- 122: Reibkraft
- 124: Hebelarm
- 126: Reaktionskraft
- 128: Stirnseite
- 130: Freiraum
- 132: Freiraum
- 134: Freiraum
- 136: Freiraum
- 138: Freiraum
- 140: Freiraum
- 142: Kippsteg

## Patentansprüche

1. Wischblatt (10) zur Reinigung von Windschutzscheiben (12) für Kraftfahrzeuge (14) mit einem Wischergummi (16), der mit einer Wischlippe (18) auf der Windschutzscheibe (12) aufliegt, und mit einer Windschaufel (20, 22, 24), die in Abwärtswischbewegung (26) vor dem Wischblatt (10) mit einer elastisch weichen Lippe (30, 32, 34, 36, 38, 40, 42) dicht über der Windschutzscheibe (12) angeordnet ist, wobei die Lippe (30, 32, 34, 36, 38, 40, 42) bei der Abwärtswischbewegung (26) mit der Windschutzscheibe (12) in Kontakt kommen kann, **dadurch gekennzeichnet, dass** die Lippe (30, 32, 34, 36, 38, 40, 42) in Richtung (44) der Wischlippe (18) zur Windschutzscheibe (12) geneigt ist und durch die Bewegungsenergie der Kippbewegung der Windschaufel (20, 22, 24) und des Wischblatts (10) über den Federweg in Richtung auf die Wischlippe (18) ausgelenkt wird.

2. Wischblatt (10) nach Anspruch 1, **dadurch gekennzeichnet, daß** die Lippe (32, 34, 36, 38, 40, 42) in dem Bereich, mit dem sie mit der Windschutzscheibe (12) in Kontakt kommt, gestuft, gezackt und/oder gewellt ist.

3. Wischblatt (10) nach Anspruch 2, **dadurch gekennzeichnet, daß** die Stufen (46, 48), Zacken (50, 52) und/oder Wellen (54, 56) eine Höhe (58, 60, 62, 64, 66, 68) kleiner als 2 mm besitzen.

4. Wischblatt (10) nach einem der vorhergehenden Ansprüche, **dadurch gekennzeichnet, daß** die Windschaufel (20) elastisch gelagert ist.

5. Wischblatt (10) nach einem der vorhergehenden Ansprüche, **dadurch gekennzeichnet, daß** die Windschaufel (20, 22, 24) ein Zweikomponentenbauteil ist mit einem festen Bauteil (70, 72, 74) und mit der elastisch weichen Lippe (30, 32, 34, 36, 38, 40, 42).

6. Verfahren zum Herstellen einer Windschaufel (20, 22, 24) für das Wischblatt nach Anspruch 5, **dadurch gekennzeichnet, dass** ein Material für das feste Bauteil (70) in eine erste Gussform gefüllt wird, im erstarrten Zustand des Materials in eine Ausnehmung (76) im festen Bauteil (70) und in eine weitere am festen Bauteil (70) angeordnete zweite Gussform (78) ein Material für die Lippe (30) eingespritzt wird und im elastisch weichen Zustand des Materials der Lippe (30) die zweite Gussform (78) vom festen Bauteil (70) entfernt und dabei die Lippe (30) zwangsentformt wird.

## Claims

1. Wiper blade (10) for cleaning windscreens (12) for motor vehicles (14), having a wiper rubber (16), which rests with a wiping lip (18) on the windscreen (12), and having a wind scoop (20, 22, 24), which is arranged tightly over the windscreen (12) in front of the wiper blade (10) by means of a flexible lip (30, 32, 34, 36, 38, 40, 42) in the downwards wiping movement (26), the lip (30, 32, 34, 36, 38, 40, 42) being able to come into contact with the windscreen (12) during the downwards wiping movement, **characterized in that** the lip (30, 32, 34, 36, 38, 40, 42) is inclined in the direction (44) of the wiping lip (18) towards the windscreen (12) and is deflected in the direction of the wiping lip (18) by the kinetic energy of the tilting movement of the wind scoop (20, 22, 24) and of the wiper blade (10) over the spring travel.

2. Wiper blade (10) according to Claim 1, **characterized in that** the lip (32, 34, 36, 38, 40, 42) is stepped, serrated and/or corrugated in the region with which it comes into contact with the windscreen (12).

3. Wiper blade (10) according to Claim 2, **characterized in that** the steps (46, 48), serrations (50, 52) and/or corrugations (54, 56) have a height (58, 60, 62, 64, 66, 68) of smaller than 2 mm.

4. Wiper blade (10) according to one of the preceding claims, **characterized in that** the wind scoop (20) is mounted elastically.

5. Wiper blade (10) according to one of the preceding claims, **characterized in that** the wind scoop (20, 22, 24) is a component of two parts, with a fixed component (70, 72, 74) and with the flexible lip (30, 32, 34, 36, 38, 40, 42).

6. Method for producing a wind scoop (20, 22, 24) for the wiper blade according to Claim 5, **characterized in that** a material for the fixed component (70) is placed into a first casting mould, and, in the solidified state of the material, a material for the lip (30) is injected into a recess (76) in the fixed component (70) and into a further, second casting mould (78) arranged on the fixed component (70) and, in the flexible state of the material of the lip (30), the second casting mould (78) is removed from the fixed component (70) and, in the process, the lip (30) is inevitably removed from the mould.

## Revendications

1. Balai d'essuie-glace (10) pour le nettoyage de pare-brise (12) de véhicules (14), avec un caoutchouc de balai (16), qui appuie une raclette (18) sur le pare-brise (12), et avec une pale contre-vent (20, 22, 24) qui, pendant le déplacement d'essuyage descendant (26), est disposée en avant du balai d'essuie-glace (10), de manière étanche au-dessus du pare-brise (12) au moyen d'une lèvre élastiquement souple (30, 32, 34, 36, 38, 40, 42), la lèvre (30, 32, 34, 36, 38, 40, 42) pouvant, pendant le déplacement d'essuyage descendant (26), venir en contact avec le pare-brise (12),
**caractérisé en ce que**
la lèvre (30, 32, 34, 36, 38, 40, 42) est inclinée dans la direction (44) de la raclette (18) vers le pare-brise (12) et, l'énergie de déplacement du mouvement de basculement de la pale contre-vent (20, 22, 24) et du balai d'essuie-glace (10), oriente sa course élastique dans la direction de la raclette (18).

2. Balai d'essuie-glace (10) selon la revendication 1,
**caractérisé en ce que**
la lèvre (32, 34, 36, 38, 40, 42) est étagée, dentelée et/ou ondulée dans sa zone qui vient en contact avec le pare-brise (12).

3. Balai d'essuie-glace (10) selon la revendication 2,
**caractérisé en ce que**
les étages (46, 48), les dents (50, 52) et/ou les ondulations (54, 56) ont une hauteur (58, 60, 62, 64, 66, 68) inférieure à 2 mm.

4. Balai d'essuie-glace (10) selon l'une des revendications précédentes,
**caractérisé en ce que**
la pale contre-vent (20) est logée élastiquement.

5. Balai d'essuie-glace (10) selon l'une des revendications précédentes,
**caractérisé en ce que**
la pale contre-vent (20, 22, 24) est un élément de construction à deux composants comportant un élément fixe (70, 72, 74) et une lèvre élastiquement souple (30, 32, 34, 36, 38, 40, 42).

6. Procédé pour la fabrication d'une pale contre-vent (20, 22, 24) pour le balai d'essuie-glace selon la revendication 5,
**caractérisé en ce qu'**
un matériau pour l'élément fixe (70) est versé dans un premier moule et, à l'état solidifié du matériau, un matériau pour la lèvre (30) est injecté dans un évidement (76) dans l'élément fixe (70) ainsi que dans un deuxième moule (78) disposé sur l'élément fixe (70) et, à l'état élastiquement souple du matériau de la lèvre (30), le deuxième moule (78) est retiré de l'élément fixe (70) et la lèvre (30) est ainsi démoulée de force.
